# EUROPEAN PATENT SPECIFICATION

(11) **EP 3 720 793 B1**
(45) Date of publication and mention of the grant of the patent: **02.11.2022**
(21) Application number: 18829999.4
(22) Date of filing: 04.12.2018
(51) Int. Cl.: B65G 47/08, B21D 43/00, B65G 57/18, B65G 47/88, B21F 23/00

(54) **SEPARATING APPARATUS FOR BARS, SEPARATING UNIT AND ASSOCIATED METHOD**
SEPARIERVORRICHTUNG FÜR STANGEN, SEPARIEREINHEIT UND ENTSPRECHENDES VERFAHREN
INSTALLATION DE SÉPARATION DE BARRES, UNITÉ DE SÉPARATION ET MÉTHODE CORRESPONDANTE

(30) Priority: 04.12.2017 IT 201700139468
(43) Date of publication of application: 14.10.2020
(73) Proprietor: Alping Italia S.r.L., 33050 Pavia Di Udine (IT)
(72) Inventor: D'ORLANDO, Gianfranco, 69100 Lugano (CH)
(74) Representative: Petraz, Gilberto Luigi
(86) International application number: PCT/IT2018/050237
(87) International publication number: WO 2019/111288

(56) References cited:
- CN-A- 106 516 778
- CN-U- 204 310 521
- JP-A- 2016 098 097
- SE-A1- 1 151 087
- US-A1- 2017 327 324

## Description

### FIELD OF THE INVENTION

The present invention concerns an apparatus to separate bars which allows to separate a predefined number of bars from a set, for example to allow them to be supplied to user machines, or simply to store them for subsequent sale to one or more customers.

The present invention also concerns at least a unit to separate bars which makes up at least part of the separation apparatus.

The present invention also concerns the connected method to separate bars.

Hereafter, by the term "bars" we mean to identify long products, that is, having a prevalent development in the axial direction, and with a round or polygonal section.

### BACKGROUND OF THE INVENTION

Apparatuses for transporting oblong articles are known, described for example in JP 2016098097, which discloses the preamble of claim 1, US-A-2005/106000, CN-A-106.829.046, US-A-4.274.781, WO-A-2007/043089 and EP-A- 0814039.

Apparatuses are also known, suitable to separate a predefined number of bars from a plurality of bars, supplied for example from a work station, in order to define, for example, a bundle of bars to be delivered to a client, or to be worked in other work machines.

In the field of the production of bars, for example for hot and cold rolling and/or extrusion, it is known, following the process of obtaining the metal product, to cut the product to size with shears to obtain the bars of predetermined length. The bars can have lengths equal to or greater than 5m, usually 12m or 24m. The bars cut to size are then transferred to a destination station by means of movement groups.

In particular, the movement groups are configured to move the bars, one adjacent and in parallel form with each other.

Usually, the movement group is defined by a chain, or belt, which is wound in a closed ring and is oriented transversely to the oblong development of the bars that are transported. The branches of the chains, which develop in a closed ring, each define a support surface for the bars. Therefore, the movement groups define, as a whole, a support plane for the bars.

In order to divide the bars, it is also known to associate separation units with the movement groups, which allow to separate the bars from each other in order, for example, to count them.

The separation units normally comprise worm screw mechanisms, in which the grooves of the screw threads define seatings in which the bars are positioned and divided.

However, these separation units are not very efficient and are often subject to frequent blockages.

In fact, despite being transferred in parallel form, most times the bars overlap and are twisted together along their length.

The high elasticity and flexibility of the bars increases these problems of overlapping and twisting.

It therefore follows that the counting of the bars is often inaccurate both in default and in excess, causing problems with the operations that are carried out downstream.

This is even more accentuated for thin bars, for example having small diameters (for example 5mm or 7mm) in which it is often easy to find, in the initial group, accumulations, overlapping, bars not properly aligned, etc.

It is also a disadvantage of these separation units that they suffer greatly from the wear of the worm screw, which considerably reduces its life span.

Another disadvantage of such separation units is that several bars can be accommodated in the throat of the worm screw, which does not allow to calculate a desired number of bars reliably.

In order to avoid this problem, with each change of format of the bars, for example for the movement of bars of different diameters, it is therefore required to replace the worm screws with others having throats of different sizes.

It is also a disadvantage of these known solutions that they do not allow adaptations for already existing apparatuses.

The purpose of the present invention is to provide an apparatus to separate bars which allows a very precise counting and selection of bars for any section and/or length of the bar, in order to make a separation apparatus as versatile as possible and in any case suitable to cover all the range of sections of the bars that it is required to count and select.

Another purpose of the invention is to provide an apparatus to separate bars which is simple to make.

Another purpose of the present invention is to provide an apparatus to separate bars which can be installed and adapted also to already existing movement groups.

Another purpose of the present invention is to provide an apparatus to separate bars which allows, even after the separation and subsequent tying into bundles of the bars, to avoid twisting the bars themselves, which can make their subsequent extraction difficult.

The Applicant has devised, tested and embodied the present invention to overcome the shortcomings of the state of the art and to obtain these and other purposes and advantages.

### SUMMARY OF THE INVENTION

The present invention is set forth and characterized in the independent claim 1, while the dependent claims describe other characteristics of the invention or variants to the main inventive idea.

In accordance with the above purposes, an apparatus to separate bars comprises:
- a plurality of movement groups defining a support plane for the bars, the movement groups being configured to move the bars in a direction of movement, and
- a plurality of separation units configured to separate one group of bars from the bars.

According to the present invention, the movement groups are distanced from each other in a direction transverse to the direction of movement so that interspaces are defined between them, and each separation unit is positioned in one of the interspaces comprised between two of the movement groups.

According to the present invention, each separation unit comprises:
- a dividing device provided with a support element having a support surface parallel to the support plane and suitable to support the bars, and a dividing element installed at one end of the support element and located, in at least one of its operating conditions, protruding with respect to the support surface in order to divide the bars located upstream with respect to the bars located downstream of the dividing element, and
- a lifting device configured to take the dividing device into at least a first operating position and a second operating position, in which the support surface is located under or aligned and respectively above the support plane.

The apparatus described above allows to separate, precisely and on each occasion as determined by the user, a desired number of bars from a group of bars, in order to transfer the desired number of bars toward a destination station located downstream.

The particular conformation of the dividing device also allows to obtain a precise division of the bars even in the case where the latter are astride and/or overlapping each other.

The particular conformation of the separation unit also allows it to be applied even to already existing movement units, without requiring particular interventions to modify the structure.

Embodiments of the present invention also concern a method to separate bars that comprises moving the bars in a direction of movement and on a support plane by means of a plurality of movement groups, and separating a group of bars from said bars by means of a plurality of separation units.

In accordance with one aspect of the present invention, each of the separation units comprises a lifting device and a dividing device provided with a support element having a support surface parallel to the support plane and a dividing element. During the movement of the bars, the support surface is kept with the lifting device under or aligned with the support plane, and during the separation, the lifting device lifts the support element in order to position the support surface above the support plane and to lift at least some of the bars with respect to the support plane, the bars positioned downstream of the separation unit being positioned resting on the movement groups and being moved toward a destination station located downstream.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of an apparatus to separate bars provided with a plurality of bar separation units in accordance with the present invention;
- fig. 2 is a front view of a unit to separate bars in a first operating position;
- fig. 3 is a front view of the unit to separate bars in fig. 2 in a second operating position;
- fig. 4 is a front view of the unit to separate bars in fig. 2 in a third operating position;
- figs. 5 to 7 show functioning sequences of the separation apparatus in fig. 1.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

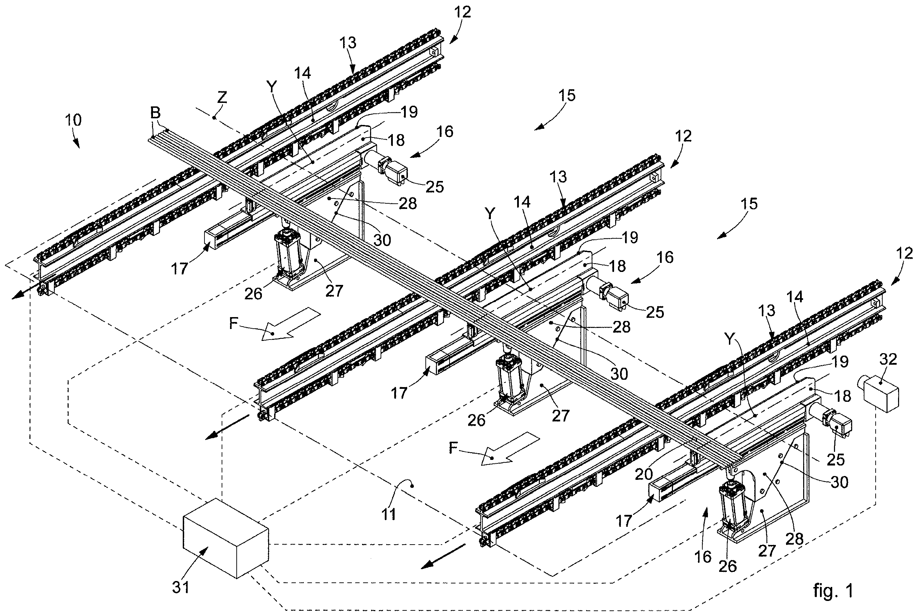

Embodiments described here with reference to fig. 1 concern an apparatus 10 to separate bars B.

By way of example only, the bars B discussed can have lengths comprised between 5m and 24m and diameters comprised between about 5mm and 100mm, preferably between about 6mm and 50mm.

According to one aspect of the present invention, the separation apparatus 10 comprises a plurality of movement groups 12 defining together between them a support plane 11 for the bars B.

Although in the attached drawings a separation apparatus 10 having three movement groups 12 is shown, it is not excluded that in possible variant embodiments the number of movement groups 12 is different, for example greater than three.

By way of example only, it can be provided that the movement groups 12 are distanced from each other by an interaxis comprised between 800 and 2500 mm.

The movement groups 12 are configured to transfer the bars B in a direction of movement F, transverse to the longitudinal development of the bars B.

The bars B are generally made to advance parallel to each other, and their longitudinal development is maintained transverse to the direction of movement F.

The movement groups 12 can have a mainly oblong development, in a direction parallel to the direction of movement F, and support thereon the bars B transverse to such an oblong development.

The movement groups 12 can be facing each other and reciprocally distanced in a direction transverse to the direction of movement F.

Each movement group 12 defines at least one support surface to support the bars B during movement. The support surfaces can lie all on the same support plane 11.

Each movement group 12 can comprise a transmission member 13 of a chain or belt type, which winds in a closed ring and is provided with at least one return segment defining the support surface for the bars.

According to a further example, the transmission member 13 can be installed on support members 14 which develop in a direction parallel to the direction of movement F. The support member 14 can comprise a support beam for the transmission member 13.

In accordance with possible solutions, the movement groups 12 are distanced from each other so that interspaces 15 are defined between them.

According to another example, the separation apparatus 10 comprises a plurality of separation units 16 configured to separate a group of bars B from the bars B which are positioned on the support plane 11.

The separation units 16 can be positioned in an intermediate position along the length of the movement units 12.

In particular, each separation unit 16 can be positioned in the interspace 15 comprised between two movement groups 12.

Embodiments of the present invention can provide that the separation units 16 are aligned with each other along a longitudinal axis Z which is parallel to the oblong development of the bars B.

According to one aspect of the present invention, each separation unit 16 comprises a dividing device 17 configured to separate a predefined number from a set of bars B.

The separation unit 16 comprises a support element 18 having a support surface 19 which lies on a plane parallel to the support plane 11 and is suitable to support the bars B.

The support element 18 can be defined by at least one of either a section bar, a bracket or a support bar.

The support element 18 can be positioned substantially parallel to the movement groups 12.

The support surface 19 can have an extension mainly in a direction parallel to the direction of movement F, that is, a longitudinal extension.

The longitudinal extension of the support surface 19 allows to define the load and support capacity of the separation unit 16.

By way of example only, it can be provided that the support surface 19 has a length, in a direction parallel to the direction of movement F, which is comprised between 500mm and 200mm, preferably between 800mm and 1200mm.

According to possible solutions, the length of the support surface 19 can be suitably determined so that it is substantially equal to the width of the layer of bars B which are moved, on each occasion, on the support surface 19.

The support element 18 can have an oblong development along a transverse axis Y which is located transverse to the longitudinal axis Z, that is, parallel to the direction of movement F.

The support element 18 is also provided with a first end edge 23 and a second end edge 24 opposite the first end edge 23. The first end edge 23 and the second end edge 24 can be located aligned with each other along the transverse axis Y.

In accordance with possible solutions, the dividing device 17 also comprises a dividing element 20 located, at least in one of its operating conditions, protruding from the support surface 19.

According to a possible solution, the dividing element 20 is installed on the support element 18 in correspondence with the first end edge 23.

In accordance with a possible solution of the invention, the dividing element 20 can comprise a tooth 21, able to be positioned protruding in a direction transverse to the support plane 11.

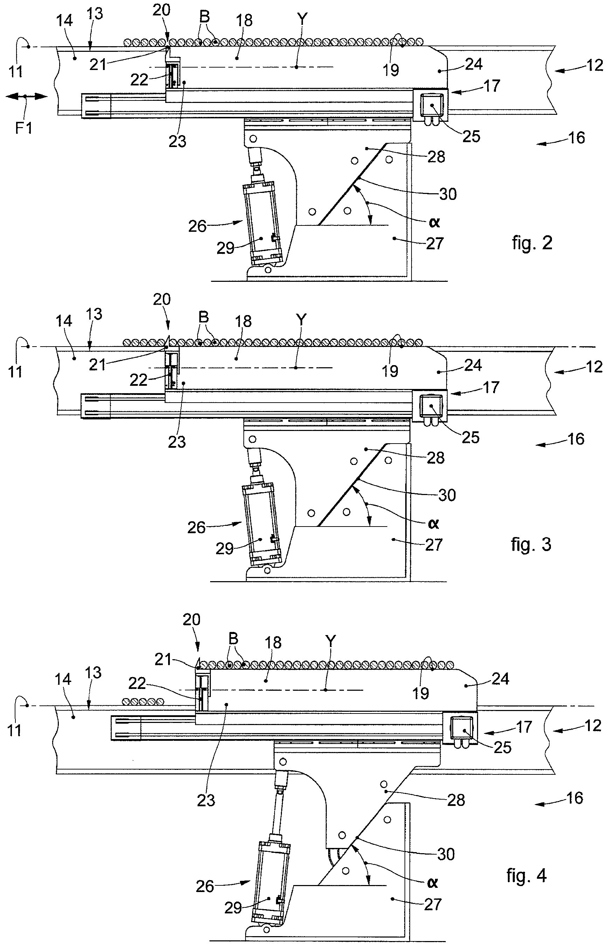

In accordance with possible embodiments of the invention, the dividing element 20 can comprise an actuator 22 configured to move the tooth 21 from an inactive position (fig. 2), in which it is positioned under the support surface 19, to an active position (figs. 3 and 4) in which it protrudes from the support surface 19, and vice versa.

The actuator 22 can comprise a linear actuator, for example of a pneumatic, electric or hydraulic type.

According to an example, a translation member 25 is associated with the support element 18 and is configured to move the support element 18 linearly in a direction parallel to the transverse axis Y. With this translation it is also possible to determine a predefined positioning of the dividing element 20 with respect to the bars B that are positioned on the support plane 11.

The translation member 25 can comprise at least one of either a linear actuator, an articulated mechanism, a screw jack, or similar and comparable components.

According to another aspect of the present invention, each separation unit 16 also comprises a lifting device 26 configured to take the dividing device 17 at least into a first operating position in which the support surface 19 lies on a plane located below or aligned with the support plane 11, and a second operating position in which the support surface 19 lies on a plane located above the support plane 11.

In particular, when the dividing device 17 is in its first position (fig. 2), the dividing device 17 does not interfere with the movement of the bars B by the movement groups 12.

When the dividing device 17 is in its second position, the dividing device 17 lifts the bars B positioned on the support surface 19 while the remaining bars B located downstream of the dividing device 17 are moved forward on the support plane 11 and in the direction of movement F.

In accordance with possible solutions, the lifting device 26 can comprise a base body 27 and a support body 28 installed slidable with respect to the base body 27 in a direction incident against the support plane 11.

The base body 27 is fixed and positioned resting on, for example, a support plane, while the support body 28 is disposed to support the dividing device 17.

In some embodiments, the lifting device 26 comprises an actuation member 29 connected to the base body 27 and to the support body 28 and provided to determine the sliding of the latter with respect to the base body 27.

In accordance with an additional example, a sliding mean 30 is interposed between the base body 27 and the support body 28, the sliding axis of which is incident against the support plane 11.

In accordance with possible solutions, the sliding mean 30 is angled with respect to the support plane 11 by an angle α of amplitude comprised between 20° and 70°, preferably between 30° and 60°.

This inclination of the sliding mean 30 allows to move the support body 28 both in a direction parallel to the direction of movement F, and also in a direction opposite the normal direction of feed of the bars, and at the same time in a direction orthogonal to the support plane 11.

According to another example, the separation apparatus 10 comprises a control and management unit 31 configured to manage the functioning at least of the dividing device 17, the movement group 12 and the lifting device 26.

In accordance with another example, the separation apparatus 10 comprises a detection device 32 configured to detect the bars B which are made to transit on the support plane 11.

The detection device 32 can comprise at least one of either a camera, a laser scanner, an ultrasonic sensor, or other types of detectors suitable for the purpose.

In accordance with a possible solution, the detection device 32 can be connected to the control and management unit 31, which is configured to count the bars B moved by the movement groups 12, and to determine the drive of the lifting device 26 and the dividing device 17.

In accordance with a possible solution, the detection device 32 can be positioned at the side of one of the movement units 12, preferably at the side of the movement group 12 located more external than the others.

This positioning of the detection device 32 allows to detect the leading ends of the bars B which are moved by the movement groups 12.

In accordance with a possible solution, the detection device 32 can be positioned aligned with the longitudinal axis Z of the separation units 16.

In accordance with figs. 1-7 we will now describe the functioning of the separation apparatus 10.

During normal functioning, a series of bars B is moved along the movement groups 12 and in the direction of movement F.

The bars B are fed in substantially parallel form to each other.

During the movement of the bars B, the detection device 32 detects the number of bars B being fed and, by means of the control and management unit 31, calculates the number of bars B.

When the detection device 32 has detected the passage of a certain number of bars B, preset for example by a user, the control and management unit 31 commands the movement groups 12 to stop.

When the movement groups 12 are stopped, it is provided to drive the separation units 16 so as to separate a group of a predefined number of bars B from the bars B.

In accordance with a possible advantageous implementation, it is provided to sequentially drive one separation unit 16 at a time, starting from the separation unit 16 located more externally to the separation unit 16 located in a position opposite the first one considered.

This solution allows to gradually separate the bars counted from those not counted, also facilitating their release from any overlapping or twisting.

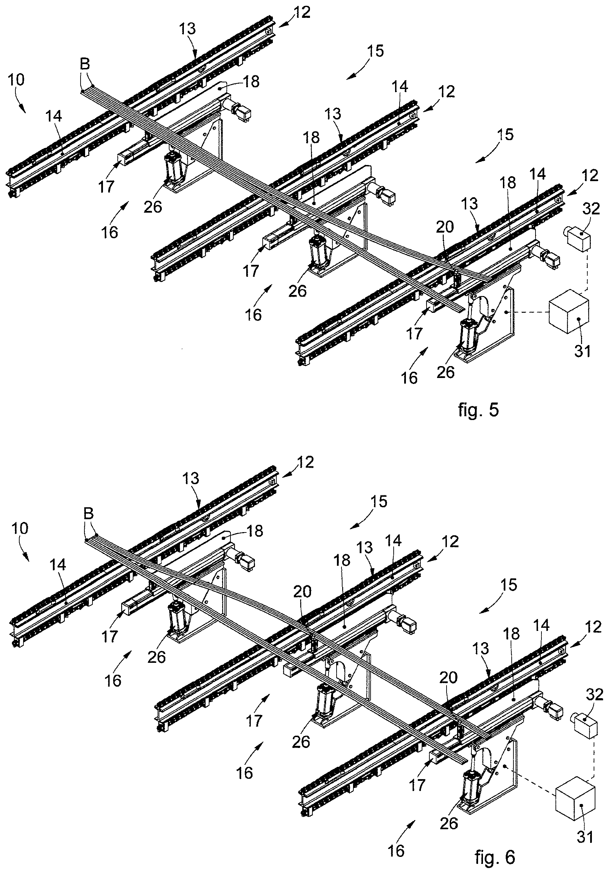

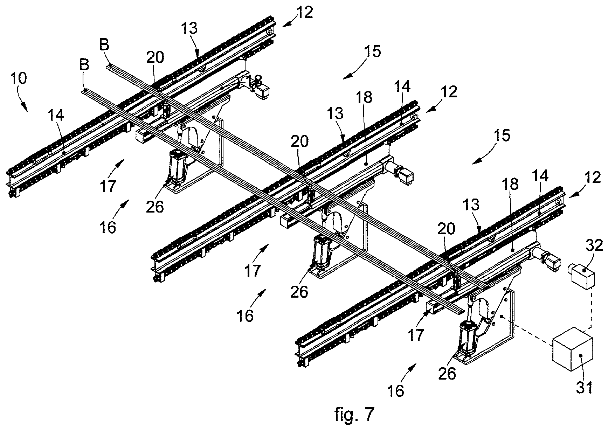

By way of example only, with reference to figs. 1, 5, 6 and 7 in which three separation units 16 are shown, it is provided in order:
- to drive the first separation unit 16 located furthest to the right (figs 1 and 5),
- to drive the central separation unit 16 (fig. 6),
- to drive the last separation unit 16, opposite the first separation unit 16, and in this case located furthest to the left (fig. 7) so as to complete the separation of the bars B counted from those not counted.

However, it is not excluded that, in possible implementations of the method, the order of driving the separation units 16 is different, or even simultaneous, for example in the case of bars having big diameters.

The drive of each of the separation units 16 provides the operations described below.

The support element 18 is moved parallel to the transverse axis Y and in the direction identified by arrow F1 in fig. 2, to position the dividing element 20 between two adjacent bars B in a desired manner. The position of the dividing element 20 identifies, in the set of bars B present on the movement groups 12, the group of bars B counted which is to be separated and which is located downstream of the dividing element 20.

In particular, it can be provided that at least one support element 18 is moved by the respective translation member 25.

In this operating condition, the dividing element 20 is taken into a protruding position with respect to the support plane 11, to divide the bars counted from those to be counted (fig. 3).

The positioning of the dividing element 20 can be obtained by actuating the actuator 22 associated with the tooth 21.

According to an alternative, not shown in the drawings, the positioning of the dividing element 20 protruding from the support plane 11 is determined by driving the lifting device 26. In this case, the dividing element 20 can be integral with the support element 18 and kept always protruding with respect to the support surface 19.

In this condition, the drive of the lifting device 26 is commanded, which lifts the dividing device 17 above the support plane 11. The lifting (fig. 4) allows to leave the counted bars B on the movement groups 12 (that is, the bars B shown on the left in fig. 4), and to lift at least some of the bars B not counted so that they are not gripped with the movement units 12.

According to a possible advantageous variant, it can be provided that when the dividing device 17 is lifted above the support plane 11, the latter lifts all the bars B not counted and which are located upstream of the dividing element 20.

In this way, only the bars already counted remain gripped on the movement units 12 and can be transferred, always in parallel form with respect to each other, avoiding possible overlapping and twisting toward the stations located downstream. This solution allows to generate, downstream, bundles of counted bars which are not twisted together, and in which also the subsequent extraction of the bars from the bundles is extremely simplified.

According to a possible variant, it can be provided that the second end edge 24 of the support element 18 is positioned so that the support plane 11 intersects it. This positioning of the second end edge 24 allows the latter to define an abutment wall against the advance of the uncounted bars and still located resting on the movement groups 12.

Moreover, during the drive of the lifting device 26, it can be provided that, in addition to obtaining a lifting of some uncounted bars B, there is also a displacement of the latter in a direction opposite the direction of normal movement of the bars B, that is, away from the bars B already counted.

Once the drive of all the separation units 16 has been completed (fig. 7), the counted bars B are positioned resting on the movement groups 12, some or possibly all the uncounted bars B are lifted with respect to the movement units 12 and, possibly, some bars B, also uncounted, are located upstream of the separation unit 16 and also resting on the movement groups 12.

In this condition, the drive of the movement groups 12 is commanded, which determine the feed only of the counted bars B toward a destination station located downstream.

The other uncounted bars B, however, remain stationary on the support elements 18.

Once the feed of the counted bars B has been completed, it is provided to return the dividing device 17 into its position aligned with the support plane 11, so as to position all the uncounted bars resting on the support plane 11, and to allow their subsequent advance.

## Claims

1. Apparatus to separate bars (B) comprising:
- a plurality of movement groups (12) defining a support plane (11) for said bars (B), said movement groups (12) being configured to move said bars (B) in a direction of movement (F), and
- a plurality of separation units (16) configured to separate one group of bars from said bars (B), wherein said movement groups (12) are distanced from each other in a direction transverse to said direction of movement (F) so that interspaces (15) are defined between them, and each separation unit (16) is positioned in one of said interspaces (15) comprised between two of said movement groups (12), **wherein** each of said separation units (16) comprises:
- a dividing device (17) provided with a support element (18) having a support surface (19) parallel to said support plane (11) and suitable to support said bars (B), and a dividing element (20) installed at one end of said support element (18) and located, in at least one of its operating conditions, protruding with respect to said support surface (19) in order to divide the bars (B) located upstream with respect to the bars located downstream of said dividing element (20), and
- a lifting device (26) configured to take said dividing device (17) into at least a first operating position and a second operating position, in which said support surface (19) is located under or aligned and respectively above said support plane (11), wherein said dividing element (20) comprises a tooth (21), positionable protruding in a direction transverse to said support plane (11),
**characterized in that** said dividing element (20) comprises an actuator (22) configured to move said tooth (21) from an inactive position, in which it is positioned under said support surface (19), to an active position, in which it protrudes with respect to said support surface (19), and vice versa, **in that** said lifting device (26) comprises a base body (27) and a support body (28) installed sliding with respect to said base body (27) in a direction incident against said support plane (11), said support body (28) being suitable to support said dividing device (17), **and in that** said lifting device (26) comprises an actuation member (29) connected to said base body (27) and to said support body (28) and provided to determine the sliding of the latter with respect to said base body (27).

2. Apparatus as in claim 1, **characterized in that** said support element (18) has an oblong development along a transverse axis (Y) located parallel to said direction of movement (F).

3. Apparatus as in claim 1 or 2, **characterized in that** said support element (18) is provided with a first end edge (23) and with a second end edge (24) opposite said first end edge (23), said first end edge (23) and said second end edge (24) being located aligned with respect to each other along said transverse axis (Y), **and in that** said dividing element (20) is installed on said support element (18) in correspondence with said first end edge (23).

4. Apparatus as in any claim hereinbefore, **characterized in that** it comprises a control and management unit (31) configured to manage the functioning at least of said dividing device (17), of said movement groups (12) and of said lifting device (26).

5. Apparatus as in claim 4, **characterized in that** it comprises a detection device (32) configured to detect the bars (B) transiting on said support plane (11), **and in that** said detection device (32) is connected to said control and management unit (31), said control and management unit (31) being configured to count the bars (B) moved by said movement groups (12) and to determine the drive of said lifting device (26) and said dividing device (17).

6. Apparatus as in claim 1, **characterized in that** between said base body (27) and said support body (28) a sliding mean (30) is interposed, the sliding axis of which is incident against said support plane (11).

7. Apparatus as in claim 6, **characterized in that** said sliding mean (30) is angled with respect to said support plane (11) by an angle of amplitude (α) comprised between 20° and 70°, preferably between 30° and 60°.

8. Apparatus as in any claim hereinbefore, **characterized in that** a translation member (25) is associated with said support element (18) and is configured to move said support element (18) linearly and to determine a predefined positioning of said dividing element (20).

9. Method to separate bars in an apparatus as in claim 1, wherein the method comprises moving the bars (B) in a direction of movement (F) and on a support plane (11) by means of a plurality of movement groups (12), and separating a group of bars (B) from said bars (B), by means of a plurality of separation units (16), **characterized in that** said movement groups (12) are distanced from each other in a direction transverse to said direction of movement (F) so that interspaces (15) are defined between them, and each separation unit (16) is positioned in one of said interspaces (15) comprised between two of said movement groups (12), **in that** each of said separation units (16) comprises a lifting device (26) and a dividing device (17) provided with a support element (18) having a support surface (19) parallel to said support plane (11) and a dividing element (20) installed at one end of said support element (18) in order to divide the bars (B) located upstream with respect to the bars (B) located downstream of the dividing element (20), **in that** during said movement of the bars (B), said support surface (19) is kept with said lifting device (26) under or aligned with the support plane (11), **and in that** during the separation, said lifting device (26) lifts said support element (18) in order to position said support surface (19) above said support plane (11) and to lift at least some of said bars (B) with respect to said support plane (11), the bars (B) positioned downstream of said separation unit (16) being positioned resting on said movement groups (12) and being moved toward a destination station located downstream.

## Patentansprüche

1. Vorrichtung zum Trennen von Stangen (B), aufweisend:
- eine Mehrzahl von Bewegungsgruppen (12), welche eine Trägerebene (11) für die Stangen (B) definieren, wobei die Bewegungsgruppen (12) dazu konfiguriert sind, die Stangen (B) in einer Bewegungsrichtung (F) zu bewegen, und
- eine Mehrzahl von Trenneinheiten (16), welche dazu konfiguriert sind, eine Gruppe von Stangen von den Stangen (B) zu trennen, **wobei** die Bewegungsgruppen (12) in einer Richtung quer zur Bewegungsrichtung (F) derart voneinander beabstandet sind, dass Zwischenräume (15) zwischen ihnen definiert sind, und jede der Trenneinheiten (16) in einem der Zwischenräume (15), welche sich zwischen zwei der Bewegungsgruppen (12) befinden, angeordnet ist, **wobei** jede der Trenneinheiten (16) aufweist:
- eine Teilungsvorrichtung (17), die mit einem Stützelement (18) versehen ist , das eine Auflagefläche (19) parallel zur Trägerebene (11) aufweist und dazu geeignet ist, die Stangen (B) zu tragen, und ein Teilungselement (20), welches an einem Ende des Stützelements (18) angebracht und in mindestens einem seiner Betriebszustände derart angeordnet ist, dass es in Bezug auf die Auflagefläche (19) hervorsteht, um die Stangen (B), welche vor dem Teilungselement (20) angeordnet sind, in Bezug auf die Stangen, welche nach dem Teilungselement (20) angeordnet sind, zu teilen, und
- eine Hebevorrichtung (26), welche dazu konfiguriert ist, die Teilungsvorrichtung (17) mindestens in eine erste Betriebsposition und eine zweite Betriebsposition zu bringen, in welchen die Auflagefläche (19) unterhalb der Trägerebene (11) oder mit dieser ausgerichtet ist, beziehungsweise oberhalb dieser angeordnet ist, wobei das Teilungselement (20) einen Zahn (21) aufweist, der in einer Richtung quer zur Trägerebene (11) hervorstehend positionierbar ist,
**dadurch gekennzeichnet, dass** das Teilungselement (20) einen Stellantrieb (22) aufweist, welcher dazu konfiguriert ist, den Zahn (21) von einer inaktiven Position, in welcher er unter der Auflagefläche (19) angeordnet ist, in eine aktive Position, in welcher er in Bezug auf die Auflagefläche (19) hervorsteht, und umgekehrt, zu bewegen, **dass** die Hebevorrichtung (26) einen Grundkörper (27) und einen Stützkörper (28), welcher in Bezug auf den Grundkörper (27) in einer Richtung gegen die Trägerebene (11) gleitend angebracht ist, wobei der Stützkörper (28) dazu geeignet ist, die Teilungsvorrichtung (17) zu stützen, **und dass** die Hebevorrichtung (26) ein Betätigungsglied (29) aufweist, welches mit dem Grundkörper (27) und dem Stützkörper (28) verbunden und dazu vorgesehen ist, das Verschieben des Letzteren in Bezug auf den Grundkörper (27) zu bestimmen.

2. Vorrichtung nach Anspruch 1, **dadurch gekennzeichnet, dass** das Stützelement (18) eine längliche Ertreckung entlang einer Querachse (Y), welche parallel zur Bewegungsrichtung (F) ausgerichtet ist, aufweist.

3. Vorrichtung nach Anspruch 1 oder 2, **dadurch gekennzeichnet, dass** das Stützelement (18) mit einer ersten Endkante (23) und einer zweiten Endkante (24) gegenüber der ersten Endkante (23) versehen ist, wobei die erste Endkante (23) und die zweite Endkante (24) in Bezug zueinander ausgerichtet entlang der Querachse (Y) angeordnet sind, **und dass** das Teilungselement (20) in Übereinstimmung mit der ersten Endkante (23) am Stützelement (18) angebracht ist.

4. Vorrichtung nach einem der vorstehenden Ansprüche, **dadurch gekennzeichnet, dass** sie eine Steuer- und Regeleinheit (31) aufweist, welche dazu konfiguriert ist, mindestens das Funktionieren der Teilungsvorrichtung (17), der Bewegungsgruppen (12) und der Hebevorrichtung (26) zu regeln.

5. Vorrichtung nach Anspruch 4, **dadurch gekennzeichnet, dass** sie eine Erfassungsvorrichtung (32) aufweist, welche dazu konfiguriert ist, das Durchlaufen der Stangen (B) auf der Trägerebene (11) zu erfassen, **und dass** die Erfassungsvorrichtung (32) mit der Steuer- und Regeleinheit (31) verbunden ist, wobei die Steuer- und Regeleinheit (31) dazu konfiguriert ist, die Stangen (B), welche durch die Bewegungsgruppen (12) bewegt werden, zu zählen und den Antrieb der Hebevorrichtung (26) und der Teilungsvorrichtung (17) zu bestimmen.

6. Vorrichtung nach Anspruch 1, **dadurch gekennzeichnet, dass** zwischen dem Grundkörper (27) und dem Stützkörper (28) ein Verschiebemittel (30) angeordnet ist, wobei dessen Verschiebeachse in eine Richtung zur Trägerebene (11) hin verläuft.

7. Vorrichtung nach Anspruch 6, **dadurch gekennzeichnet, dass** das Verschiebemittel (30) in Bezug auf die Trägerebene (11) in einem Winkel der Größe (α), welcher zwischen 20° und 70°, vorzugsweise zwischen 30° und 60°, beträgt, winkelig angeordnet ist.

8. Vorrichtung nach einem der vorstehenden Ansprüche, **dadurch gekennzeichnet, dass** dem Stützelement (18) ein Umsetzungsglied (25) zugeordnet und dafür eingerichtet ist, das Stützelement (18) linear zu bewegen und ein vordefiniertes Positionieren des Teilungselements (20) festzulegen.

9. Verfahren zum Trennen von Stangen in einer Vorrichtung nach Anspruch 1, wobei das Verfahren das Bewegen der Stangen (B) in eine Bewegungsrichtung (F) und auf einer Trägerebene (11) mittels einer Mehrzahl von Bewegungsgruppen (12) und das Trennen einer Gruppe von Stangen (B) von den Stangen (B) mittels einer Mehrzahl von Trenneinheiten (16) umfasst, **dadurch gekennzeichnet, dass** die Bewegungsgruppen (12) in einer Richtung quer zur Bewegungsrichtung (F) derart voneinander beabstandet sind, dass Zwischenräume (15) zwischen ihnen definiert sind und dass jede der Trenneinheiten (16) in einem der Zwischenräume (15), welche sich zwischen zwei der Bewegungsgruppen (12) befinden, angeordnet ist, **dass** jede der Trenneinheiten (16) eine Hebevorrichtung (26) und eine Teilungsvorrichtung (17) umfasst, die mit einem Stützelement (18) versehen ist, das eine Auflagefläche (19) parallel zur Trägerebene (11) und ein an einem Ende des Stützelements (18) angebrachtes Teilungselement (20) aufweist, um die Stangen (B), welche vor dem Teilungselement (20) angeordnet sind, in Bezug auf die Stangen, welche nach dem Teilungselement (20) angeordnet sind, zu teilen, **dass** während der Bewegung der Stangen (B) die Auflagefläche (19) mit der Hebevorrichtung (26) unterhalb der Trägerebene (11) oder mit dieser ausgerichtet gehalten wird, **und dass** bei der Trennung die Hebevorrichtung (26) das Stützelement (18) hebt, um die Auflagefläche (19) oberhalb der Trägerebene (11) zu positionieren und mindestens einige der Stangen (B) in Bezug auf die Trägerebene (11) anzuheben, wobei die Stangen (B), welche nach der Trennungseinheit (16) angeordnet sind, derart positioniert werden, dass sie auf den Bewegungsgruppen (12) aufliegen und zu einer nachgelagerten Zielstation bewegt werden.

## Revendications

1. Appareil pour séparer des barres (B), comprenant :
- une pluralité de groupes de déplacement (12) définissant un plan de support (11) pour lesdites barres (B), lesdits groupes de déplacement (12) étant configurés pour déplacer lesdites barres (B) dans une direction de déplacement (F), et
- une pluralité d'unités de séparation (16) configurées pour séparer un groupe de barres à partir desdites barres (B), dans lequel lesdits groupes de déplacement (12) sont espacés les uns des autres dans une direction transversale à ladite direction de déplacement (F) de sorte que des espaces intermédiaires (15) sont définis entre eux, et chaque unité de séparation (16) est positionnée dans l'un desdits espaces intermédiaires (15) compris entre deux desdits groupes de déplacement (12), dans lequel chacune desdites unités de séparation (16) comprend :
- un dispositif de division (17) pourvu d'un élément de support (18) présentant une surface de support (19) parallèle audit plan de support (11) et apte à supporter lesdites barres (B), et un élément de division (20) installé à une extrémité dudit élément de support (18) et situé, dans au moins l'une de ses conditions de fonctionnement, faisant saillie par rapport à ladite surface de support (19) afin de diviser les barres (B) situées en amont par rapport aux barres situées en aval dudit élément de division (20), et
- un dispositif de levage (26) configuré pour amener ledit dispositif de division (17) dans au moins une première position de fonctionnement et une seconde position de fonctionnement, où ladite surface de support (19) est située au-dessous dudit plan de support (11) ou alignée et respectivement au-dessus de celui-ci, dans lequel ledit élément de division (20) comprend une dent (21), pouvant être positionnée en saillie dans une direction transversale par rapport audit plan de support (11),
**caractérisé en ce que** ledit élément de division (20) comprend un actionneur (22) configuré pour déplacer ladite dent (21) à partir d'une position inactive, dans laquelle elle est positionnée sous ladite surface de support (19), vers une position active, dans laquelle elle fait saillie par rapport à ladite surface de support (19), et vice versa, **en ce que** ledit dispositif de levage (26) comprend un corps de base (27) et un corps de support (28) installé coulissant par rapport audit corps de base (27) dans une direction incidente contre ledit plan de support (11), ledit corps de support (28) étant approprié pour supporter ledit dispositif de division (17), **et en ce que** ledit dispositif de levage (26) comprend un élément d'actionnement (29) relié audit corps de base (27) et audit corps de support (28) et prévu pour déterminer le coulissement de ce dernier par rapport audit corps de base (27).

2. Appareil selon la revendication 1, **caractérisé en ce que** ledit élément de support (18) présente un développement oblong le long d'un axe transversal (Y) situé parallèlement à ladite direction de déplacement (F).

3. Appareil selon la revendication 1 ou 2, **caractérisé en ce que** ledit élément de support (18) est pourvu d'un premier bord d'extrémité (23) et d'un second bord d'extrémité (24) opposé audit premier bord d'extrémité (23), ledit premier bord d'extrémité (23) et ledit second bord d'extrémité (24) étant situés alignés l'un par rapport à l'autre le long dudit axe transversal (Y), et **en ce que** ledit élément de division (20) est installé sur ledit élément de support (18) en correspondance avec ledit premier bord d'extrémité (23).

4. Appareil selon l'une quelconque des revendications précédentes, **caractérisé en ce qu'**i**l** comprend une unité de commande et de gestion (31) configurée pour gérer le fonctionnement au moins dudit dispositif de division (17), desdits groupes de déplacement (12) et dudit dispositif de levage (26).

5. Appareil selon la revendication 4, **caractérisé en ce qu'**il comprend un dispositif de détection (32) configuré pour détecter les barres (B) transitant sur ledit plan de support (11), et **en ce que** ledit dispositif de détection (32) est relié à ladite unité de commande et de gestion (31), ladite unité de commande et de gestion (31) étant configurée pour compter les barres (B) déplacées par lesdits groupes de déplacement (12) et pour déterminer l'entraînement dudit dispositif de levage (26) et dudit dispositif de division (17).

6. Appareil selon la revendication 1, **caractérisé en ce qu'**entre ledit corps de base (27) et ledit corps de support (28) est interposé un moyen de coulissement (30), dont l'axe de coulissement est incident contre ledit plan de support (11).

7. Appareil selon la revendication 6, **caractérisé en ce que** ledit moyen de coulissement (30) est incliné par rapport audit plan de support (11) d'un angle d'amplitude (α) compris entre 20° et 70°, de préférence entre 30° et 60°.

8. Appareil selon l'une quelconque des revendications précédentes, **caractérisé en ce qu'**un élément de translation (25) est associé audit élément de support (18) et est configuré pour déplacer ledit élément de support (18) linéairement et pour déterminer un positionnement prédéfini dudit élément de division (20).

9. Procédé pour séparer des barres dans un appareil selon la revendication 1, dans lequel le procédé comprend un déplacement des barres (B) dans une direction de déplacement (F) et sur un plan de support (11) au moyen d'une pluralité de groupes de déplacement (12), et une séparation d'un groupe de barres (B) à partir desdites barres (B), au moyen d'une pluralité d'unités de séparation (16), **caractérisé en ce que** lesdits groupes de déplacement (12) sont espacés les uns des autres dans une direction transversale à ladite direction de déplacement (F) de telle sorte que des espaces intermédiaires (15) sont définis entre eux, et chaque unité de séparation (16) est positionnée dans l'un desdits espaces intermédiaires (15) compris entre deux desdits groupes de déplacement (12), **en ce que** chacune desdites unités de séparation (16) comprend un dispositif de levage (26) et un dispositif de division (17) pourvu d'un élément de support (18) présentant une surface de support (19) parallèle audit plan de support (11) et d'un élément de division (20) installé à une extrémité dudit élément de support (18) afin de diviser les barres (B) situées en amont par rapport à l'élément de support (18) aux barres (B) situées en aval de l'élément de séparation (20), **en ce que,** pendant ledit déplacement des barres (B), ladite surface de support (19) est maintenue avec ledit dispositif de levage (26) sous ou alignée avec le plan de support (11), **et en ce que,** pendant la séparation, ledit dispositif de levage (26) soulève ledit élément de support (18) afin de positionner ladite surface de support (19) au-dessus dudit plan de support (11) et de soulever au moins certaines desdites barres (B) par rapport audit plan de support (11), les barres (B) positionnées en aval de ladite unité de séparation (16) étant positionnées en appui sur lesdits groupes de déplacement (12) et étant déplacées vers une station de destination située en aval.
